# EUROPEAN PATENT SPECIFICATION

(11) **EP 1 445 444 B1**
(45) Date of publication and mention of the grant of the patent: **08.06.2011**
(21) Application number: 04250279.9
(22) Date of filing: 20.01.2004
(51) Int. Cl.: F01P 5/12, B60H 1/03, F04D 13/06

(54) **An electrically driven coolant pump**
Eine elektrisch angetriebene Kühlmittelpumpe
Une pompe de refroidissement à entraînement électrique

(30) Priority: 07.02.2003 GB 0302782
(43) Date of publication of application: 11.08.2004
(73) Proprietor: Ford Global Technologies, LLC, Dearborn, MI 48126 (US)
(72) Inventor: Pegg, Ian, Chelmsford Essex CM3 4QN (GB); Routledge, Leslie, Essex SS5 5AX (GB)
(74) Representative: Grunfeld, David Peter

(56) References cited:
- EP-A- 0 976 917
- DE-A- 10 012 663
- DE-A- 19 921 421
- US-B1- 6 260 766

## Description

This invention relates to cooling systems and electrically driven coolant pumps for internal combustion engines, particularly for motor vehicles.

A typical automobile engine cooling system includes an engine coolant jacket, a radiator, a fan for drawing air through the radiator, a circulatory pump for circulating the coolant from the engine through the radiator and return.

Such a system typically includes a thermostat which opens to allow the circulation of the coolant when the engine reaches a minimum desired operating temperature. The coolant flow is typically circulated through the system by an electrically operated pump driven by a electrical motor arranged coaxially with the pump impeller.

During the engine warm-up period insufficient heat may be transmitted from the internal combustion engine to the coolant to support passenger compartment heater requirements. This is a particular problem during cold climatic conditions. Additional heat transfer to the coolant may also be required for other ancilliary devices such as diesel engine particulate filters.

The slow transfer of heat from the engine to the coolant during engine warm up may also give rise to problems with more fuel efficient engines, for example diesel direct injection engines or direct injection spark ignition engines etc.

DE4433814 discloses an engine cooling system in which the coolant is passed over supplementary electrical heating elements incorporated into the cooling system.

US 6260766 discloses an engine cooling system comprising an electrically driven pump in which the coolant flows through a water jacket around the pump electric motor so that heat generated from the electric motor is transmitted to the cooling water.

EP 0976917 discloses an engine cooling system comprising an electrically driven pump including a device for generating heat at the phase windings of the electric motor for warming up the coolant.

The present invention ameliorates the above problems and provides a novel means for heating the engine coolant.

According to the present invention there is provided an electrically driven coolant pump for an internal combustion engine, the pump having an impeller located in a chamber with an inlet for receiving coolant from a radiator or other coolant circuit and an outlet directing coolant to the engine, and an electric motor for driving the impeller, the motor having a housing through which coolant flow passes permitting heat exchange between the electric motor and the coolant, wherein some of the flow of coolant is diverted through the motor housing by a flow control valve.

By controlling the flow of coolant through the motor housing, the amount of heat exchanged between the electric motor and the coolant can also be controlled.

Preferably, the speed of the electric motor is adjustable to achieve a desired coolant flow rate and heat input to the coolant.

Suitably, a flow control valve may be provided at the pump outlet.

Alternatively or in addition, a flow control valve may be located within the pump. The flow control valve may comprise a diverter located within the chamber to divert a portion of the pumped outlet flow through a inlet port into the motor housing, the flow exiting the motor housing back into the pump chamber via an outlet port.

Preferably the coolant passes directly over the winding of the motor.

The coolant flow into the motor housing may be controlled by a variable flow restriction valve.

Preferably, the outlet flow from the pump passes through a flow control valve which controls the volume flow of coolant through the outlet. The control valve may be provided integrally with the pump outlet or may be a separate component located downstream of the pump. The valves may be provided with an actuator, which may comprise an electrical actuator or a vacuum operated actuator which operates from a vacuum source on the vehicle e.g. a vacuum pump or through the vehicle inlet manifold pressure, for operation of the respective valve. The valves may also be provided with a sensor which monitors the control position of the valve.

The invention also relates to engine cooling systems that include a pump as described above.

Yet another aspect of the invention relates to a motor vehicle internal combustion engine cooling system having an electrically driven liquid coolant pump having an inlet for receiving coolant from a radiator and outlet passing coolant to the engine, wherein the electrical motor for the pump is housed in a coolant reservoir permitting heat transfer from the motor windings to the coolant, some of the flow of coolant being diverted through the coolant reservoir by a flow control valve.

The system may further include a control module for operation of the restriction valve, the module being connected to a plurality of sensors for monitoring a plurality of engine conditions, and preferably vehicle passenger compartment conditions.

Yet another aspect of the invention provides a method of heating the cooling fluid through the cooling system of an internal combustion engine, the system including an electrically driven circulatory pump, wherein coolant flows past the electrical motor of the pump, characterised by increasing a portion of the flow of coolant past the electric motor and increasing the speed of the electric motor.

Preferably, the coolant is passed directly over the electrical windings of the pump.

The invention will be described by way of example only and with reference to the accompanying drawings in which:
- Fig. 1: is a schematic drawing of an vehicle engine with an external coolant pump,
- Fig. 2: is a schematic drawing of a coolant pump according to the present invention,
- Fig. 3: is a flow diagram of a control for the restriction valve in the pump of Fig. 2,
- Fig. 4: is a schematic drawing of a second coolant pump according to the invention, and
- Fig.5: is a schematic drawing of a third coolant pump also according to the present invention.

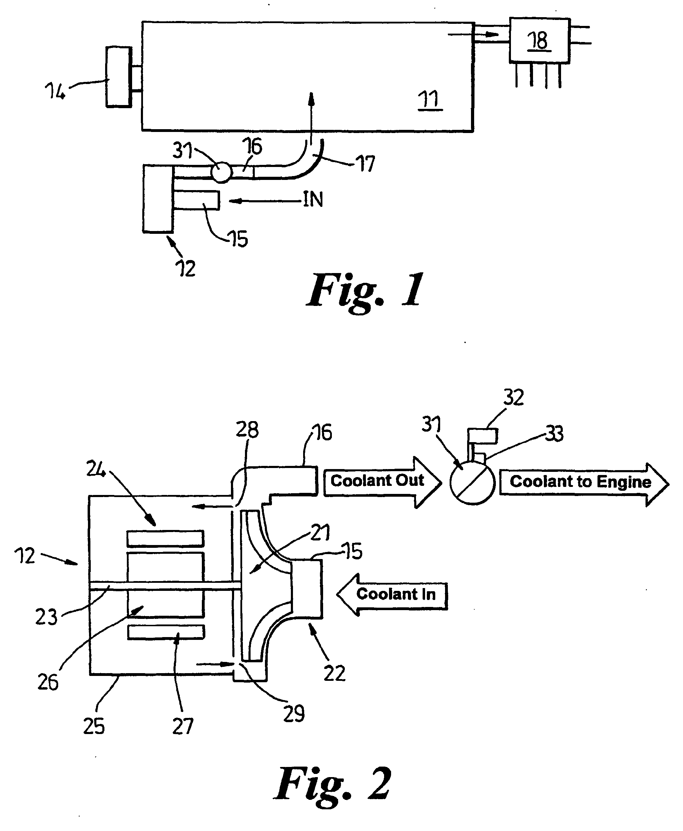

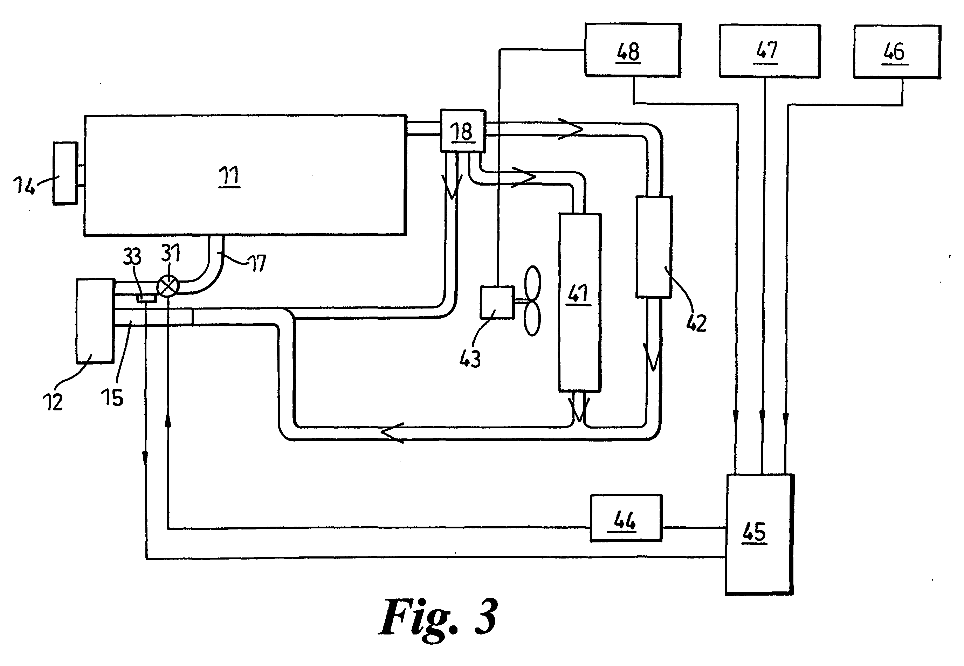

With reference to FIG 1, there is shown an internal combustion engine 11 having a cooling jacket through which a liquid coolant, typically a water/glycol mix, is pumped. The coolant is pumped through the engine 11 by an electrically driven circulatory pump 12 mounted externally of the engine. The coolant enters the pump inlet 15 from a radiator (see Fig. 3) and is pumped through pump outlet 16 into the engine 11 via conduit 17. The coolant typically exits the engine via a thermostatically regulated control valve or valves 18.

With reference also to Fig. 2, the pump 12 is an impeller pump having a chamber housing 22 in which an impeller 21 is located. Coolant enters the chamber housing 22 via the pump inlet 15, which is arranged coaxially with the impeller 21, and coolant is pumped out of the chamber via the pump outlet 16. The impeller 21 is secured to one end of rotatable impeller shaft 23.

The impeller shaft 23 is driven by a DC electric motor 24 located within a hollow motor housing 25 mounted on the rear of the impeller chamber housing 22. The impeller shaft 23 forms part of the rotor 26 of the motor and is caused to rotate by electric current passing through the stator 27. The motor housing 25 acts as a coolant reservoir and has a coolant inlet port 28 on the pumped side of the impeller chamber and a coolant outlet port 29 on the low pressure side of the impeller allowing coolant to pass over the motor windings.

The coolant flow from the pump passes through a volume flow regulating or restricting valve 31 which may be of any suitable type, for example a ball valve, or plate valve, which causes minimum flow restriction when fully open.

The valve 31 may be enclosed in a separate housing which is mounted to the pump outlet 16 to form a single assembly. The valve 31 is operated by an actuator 32 which again may be of any suitable type, for example hydraulic, electrical, or preferably a vacuum actuator which operate by a vacuum source on the vehicle. The actuator 32 is biased to a valve open condition so that the valve 31 restricts coolant flow only when the actuator 32 is energised, and is open in the case of actuator failure. The valve condition is monitored by a sensor 33.

Now with reference to Fig. 3 there is shown an engine cooling system which includes the pump 12. The liquid coolant is pumped into the engine 11 and the heated coolant exits the engine through outlet 18 and passes to a radiator 41 and typically to a heat exchanger 42 for heating the vehicle passenger compartment. The coolant then returns to the engine 11 via the pump 12. A cooling fan 43 is arranged to draw cooling air through the radiator 41.

The valve actuator 32 is operated by a valve control 44 which receives control signals from a cooling system control module 45. The control module 45 receives input signals from a plurality of different sources. The module 45 receives a valve condition signal from sensor 33 to complete the control loop for the restriction valve 31, but the actual valve condition will be determined in response to other engine condition signals and to parameters which may be programmed into an engine map.

The sensors may be divided into three types, vehicle parameters sensors 46, power train parameters sensors 47, and heating and cooling parameter sensors 48.

The vehicle parameter sensors 46 may include torque demand sensor e.g. accelerator pedal position, gear, speed and ignition key status.

The power train sensors 47 may include sensors for engine air intake temperature, cylinder head metal body temperature, engine coolant outlet temperature, engine speed, engine air flow and engine fuel demand.

The heating and cooling sensors 48 may include ambient air temperature, ambient pressure, air conditioning, passenger compartment temperature settings and fan control settings, and radiator fan status.

The above lists of sensors are by way of example only.

The control module 45 processes the input signals from the various sensors and determines the optimum engine temperature in accordance with the pre-programmed engine map. The valve actuator 32 is then activated to increase or decrease the flow through the valve 31 dependant upon the relationship between the engine coolant temperature, passenger compartment temperature and actual engine metal temperature and coolant flow rate required.

When the engine coolant is at normal operating temperature the coolant pump speed generates the required coolant flow in proportion to engine speed and loading in order to meet the necessary cooling requirements and the valve 31 is fully open.

When engine and/or vehicle passenger compartment(s) are cold, the pump 12 is operated at high speeds and the flow of coolant is restricted by operation of the valve 31. Coolant flow through the motor housing 25 therefore increases. Heat is generated within the pump motor 24 and transferred to the coolant, while the high pump speed serves to generate additional heat in the coolant to assist with the heating of the engine and/or the vehicle passenger compartment. By setting the flow rate from the pump to low, the engine will warm up quicker while the heated coolant will still allow heating of the passenger compartment.

The above has several advantages, a) heat generated in the pump motor, which may have gone to waste, is recovered by the coolant, b) mechanical pumping of the coolant generates additional heat, c) there is no need for supplementary coolant heaters, which reduces the mass, size and complexity of the cooling system and d) the flow control allows the flexibility to optimise heat generation or cooling efficiency depending on requirements.

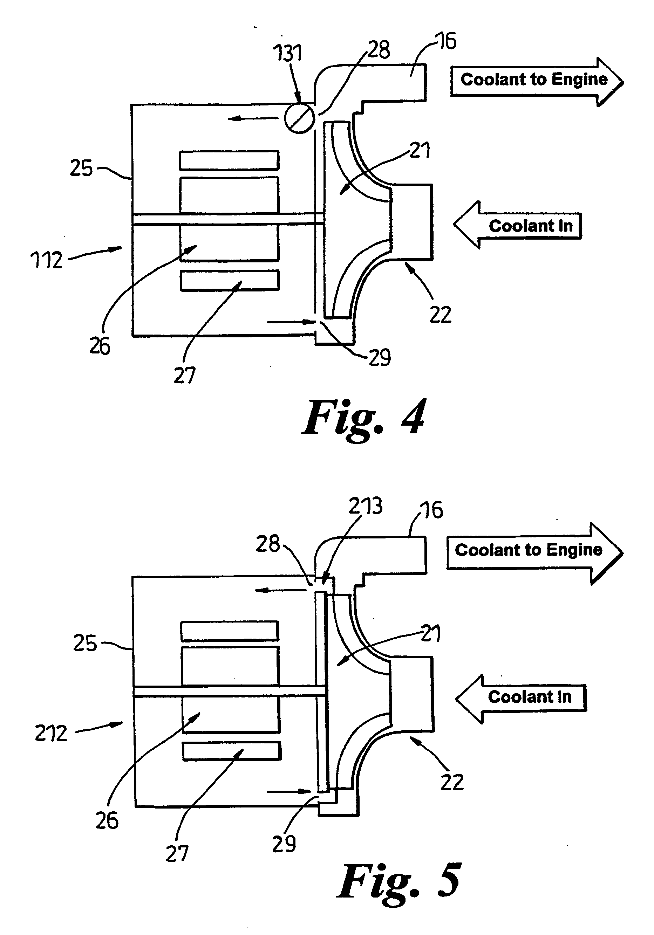

Once the coolant and engine are at their desired temperatures the electric motor may still need cooling. This is achieved by having a controllable coolant flow over the motor 24. With reference now to Fig. 4, there is shown a modified pump 112 in which a flow control valve 131 is located within pump 112 to control the flow of coolant into the motor housing 25 via inlet port 28. This control valve 131 may be an additional valve to the valve 31 or a replacement therefor.

By allowing a low pressure route through the motor housing 25 compared to the engine coolant circuit, some of the coolant flow is diverted through the motor 24. To achieve a desired flow rate to the engine 11 and heater matrix 42 a higher motor speed may be needed, so increasing the heat flow into the coolant by virtue of the heat generated within the pump motor as well as the mechanical pumping of the fluid. The control valve 131 may be provided with a control feed back as described for the valve 31.

With reference to Fig 5, there is shown another modified pump 212 in which the rear wall of the impeller housing has moveable diverter 213 mounted thereon adjacent the inlet port 28 to divert a portion of the pumped flow into the motor housing 25.

## Claims

1. An electrically driven coolant pump (12) for an internal combustion engine (11), the pump having an impeller (21) located in a chamber with an inlet (15) for receiving coolant from a radiator (41) or other coolant circuit and an outlet (16) directing coolant to the engine (11), and an electric motor (24) for driving the impeller (21), the motor (24) having a housing (25) through which coolant flow passes permitting heat exchange between the electric motor (24) and the coolant, **characterised in that** some of the flow of coolant is diverted through the motor housing (25) by a flow control valve (31, 131, 213).

2. A pump as claimed in Claim 1, wherein the speed of the electric motor (24) is adjustable to achieve a desired coolant flow rate and heat input to the coolant.

3. A pump as claimed in Claim 1 or 2, wherein a flow control valve (31) is provided at the pump outlet (16).

4. A pump as claimed in preceding claim, wherein a flow control valve (131, 213) is located within the pump (12).

5. A pump as claimed in Claim 4, wherein the flow control valve comprises a moveable diverter (213) located in
the chamber to divert a portion of the pumped outlet flow through an inlet port (28) into the motor housing (25).

6. A pump as claimed in any preceding claim, wherein the coolant passes directly over the windings of the motor (24).

7. A pump as claimed in any preceding claim, wherein each flow control valve (31, 131, 213) is provided with a respective actuator (32) for operation of the valve.

8. A pump as claimed in any preceding claim, wherein each flow control valve (31, 131, 213) has a sensor (33) which monitors the control position of the respective valve.

9. An engine cooling system for an internal combustion engine (11) comprising a pump (12) as claimed in any preceding claim.

10. A motor vehicle internal combustion engine cooling system having an electrically driven liquid coolant pump (12) as claimed in any of claims 1 to 8.

11. A system as claimed in Claim 9 or 10, further including a control module (45) for operation of the flow control valve (31, 131, 213) and control of the speed of the electric motor (24), the module (45) being connected to a plurality of sensors (46, 47, 48) for monitoring a plurality of engine conditions and vehicle passenger compartment conditions.

12. A method of heating the coolant flowing through a cooling system of an internal combustion engine (11) which includes an electrically driven circulatory pump (12), wherein a portion of the coolant flows past the electric motor (24) of the pump (12), **characterised by** increasing a portion of the flow of coolant past the electric motor (24) and increasing the speed of the electric motor (24).

13. A method as claimed in Claim 12, wherein the coolant passes directly over the electrical windings of the pump motor (24).

14. A method as claimed in Claim 12 or 13, wherein the heat generated is used to heat engine coolant of a motor (11) when the engine temperature is below that needed to heat the vehicle passenger compartment.

## Patentansprüche

1. Elektrisch angetriebene Kühlmittelpumpe (12) für einen Verbrennungsmotor (11), wobei die Pumpe ein Laufrad (21), das in einer Kammer mit einem Einlass (15) zum Empfang von Kühlmittel von einem Kühler (41) oder einem anderen Kühlkreislauf und einem Auslass (16), der Kühlmittel zum Motor (11) leitet, angeordnet ist, und einen Elektromotor (24) zum Antrieb des Laufrads (21) aufweist, wobei der Motor (24) ein Gehäuse (25) aufweist, durch das Kühlmittelstrom passiert, wodurch Wärmeaustausch zwischen dem Elektromotor (24) und dem Kühlmittel gestattet wird, **dadurch gekennzeichnet, dass** ein Teil des Kühlmittelstroms mittels eines Stromregelventils (31, 131, 213) durch das Motorgehäuse (25) geleitet wird.

2. Pumpe nach Anspruch 1, wobei die Drehzahl des Elektromotors (24) einstellbar ist, um einen Sollkühlmitteldurchfluss und eine Sollwärmezuführung zum Kühlmittel zu erreichen.

3. Pumpe nach Anspruch 1 oder 2, wobei ein Stromregelventil (31) am Pumpenauslass (16) vorgesehen ist.

4. Pumpe nach dem vorhergehenden Anspruch, wobei ein Stromregelventil (131, 213) in der Pumpe (12) angeordnet ist.

5. Pumpe nach Anspruch 4, wobei das Stromregelventil einen beweglichen Umleiter (213) umfasst, der in der Kammer angeordnet ist, um einen Teil des gepumpten Auslassstroms durch eine Einlassöffnung (28) in das Motorgehäuse (25) zu leiten.

6. Pumpe nach einem vorhergehenden Anspruch, wobei das Kühlmittel direkt über die Wicklungen des Motors (24) strömt.

7. Pumpe nach einem vorhergehenden Anspruch, wobei jedes Stromregelventil (31, 131, 213) mit einem jeweiligen Aktuator (32) zur Betätigung des Ventils versehen ist.

8. Pumpe nach einem vorhergehenden Anspruch, wobei jedes Stromregelventil (31, 131, 213) einen Sensor (33) aufweist, der die Steuerstellung des jeweiligen Ventils überwacht.

9. Motorkühlsystem für einen Verbrennungsmotor (11), der eine Pumpe (12) nach einem vorhergehenden Anspruch umfasst.

10. Kraftfahrzeugverbrennungsmotorkühlsystem mit einer elektrisch angetriebenen Flüssigkühlmittelpumpe (12) nach einem der Ansprüche 1 bis 8.

11. System nach Anspruch 9 oder 10, das weiterhin ein Steuermodul (45) zum Betrieb des Stromregelventils (31, 131, 213) und zur Steuerung der Drehzahl des Elektromotors (24) enthält, wobei das Modul (45) mit mehreren Sensoren (46, 47, 48) zur Überwachung mehrerer Motorzustände und Fahrzeuginnenraumzustände verbunden ist

12. Verfahren zum Erwärmen des Kühlmittels, das durch ein Kühlsystem eines Verbrennungsmotors (11) strömt, das eine elektrisch angetriebene Umlaufpumpe (12) enthält, wobei ein Teil des Kühlmittels am Elektromotor (24) der Pumpe (12) vorbei strömt, **gekennzeichnet durch** Erhöhen eines Teils des am Elektromotor (24) vorbei strömenden Kühlmittelstroms und Erhöhen der Drehzahl des Elektromotors (24).

13. Verfahren nach Anspruch 12, wobei das Kühlmittel direkt über die elektrischen Wicklungen des Pumpenmotors (24) strömt.

14. Verfahren nach Anspruch 12 oder 13, wobei die erzeugte Wärme dazu verwendet wird, Motorkühlmittel eines Motors (11) zu erwärmen, wenn die Motortemperatur unter der zum Erwärmen des Fahrzeuginnenraums erforderlichen liegt.

## Revendications

1. Pompe de réfrigérant (12) entraînée électriquement, pour un moteur à combustion interne (11), la pompe ayant un rotor (21) situé dans une chambre avec une entrée (15) pour recevoir le réfrigérant provenant d'un radiateur (41) ou autre circuit de réfrigérant et une sortie (16) dirigeant le réfrigérant vers le moteur (11), et un moteur électrique (24) pour entraîner le rotor (21), le moteur (24) ayant un carter (25) à travers lequel passe un écoulement de réfrigérant, permettant un échange de chaleur entre le moteur électrique (24) et le réfrigérant, **caractérisée en ce qu'**une partie de l'écoulement de réfrigérant est déviée à travers le carter du moteur (25) par une soupape de régulation de l'écoulement (31, 131, 213).

2. Pompe selon la revendication 1, dans laquelle la vitesse du moteur électrique (24) est ajustable de manière à réaliser un débit de réfrigérant souhaité et un apport de chaleur souhaité dans le réfrigérant.

3. Pompe selon la revendication 1 ou 2, dans laquelle une soupape de régulation de l'écoulement (31) est prévue au niveau de la sortie de la pompe (16).

4. Pompe selon l'une quelconque des revendications précédentes, dans laquelle une soupape de régulation de l'écoulement (131, 213) est située dans la pompe (12).

5. Pompe selon la revendication 4, dans laquelle la soupape de régulation de l'écoulement comprend un déflecteur mobile (213) disposé dans la chambre pour dévier une portion de l'écoulement de sortie pompé à travers un orifice d'entrée (28) dans le carter du moteur (25).

6. Pompe selon l'une quelconque des revendications précédentes, dans laquelle le réfrigérant passe directement par-dessus les enroulements du moteur (24).

7. Pompe selon l'une quelconque des revendications précédentes, dans laquelle chaque soupape de régulation de l'écoulement (31, 131, 213) est pourvue d'un actionneur respectif (32) pour faire fonctionner la soupape.

8. Pompe selon l'une quelconque des revendications précédentes, dans laquelle chaque soupape de régulation de l'écoulement (31, 131, 213) a un capteur (33) qui contrôle la position de régulation de la soupape respective.

9. Système de refroidissement de moteur pour un moteur à combustion interne (11) comprenant une pompe (12) selon l'une quelconque des revendications précédentes.

10. Système de refroidissement de moteur à combustion interne d'un véhicule automobile ayant une pompe de réfrigérant liquide entraînée électriquement (12) selon l'une quelconque des revendications 1 à 8.

11. Système selon la revendication 9 ou 10, comportant en outre un module de régulation (45) pour faire fonctionner la soupape de régulation d'écoulement (31, 131, 213) et réguler la vitesse du moteur électrique (24), le module (45) étant connecté à une pluralité de capteurs (46, 47, 48) pour surveiller une pluralité de conditions du moteur et de conditions dans le compartiment passager du véhicule.

12. Procédé pour faire chauffer le réfrigérant s'écoulant à travers un système de refroidissement d'un moteur à combustion interne (11) qui comporte une pompe à circulation (12) entraînée électriquement, une portion du réfrigérant s'écoulant au-delà du moteur électrique (24) de la pompe (12), **caractérisé par** l'augmentation d'une portion de l'écoulement du réfrigérant au-delà du moteur électrique (24) et l'augmentation de la vitesse du moteur électrique (24).

13. Procédé selon la revendication 12, dans lequel le réfrigérant passe directement par-dessus les enroulements électriques du moteur de la pompe (24).

14. Procédé selon la revendication 12 ou 13, dans lequel la chaleur produite est utilisée pour chauffer le réfrigérant de moteur d'un moteur (11) lorsque la température du moteur est en dessous de celle requise pour chauffer le compartiment passager du véhicule.
